# EUROPÄISCHE PATENTANMELDUNG

(11) **EP 1 422 398 A1**
(43) Veröffentlichungstag der Anmeldung: **26.05.2004**
(21) Anmeldenummer: 03025885.9
(22) Anmeldetag: 12.11.2003
(51) Int. Cl.: F01N 11/00, F02D 41/14

(54) **Verfahren zur Diagnose der Funktionsfähigkeit einer Abgas-Katalysatoreinheit**

(30) Priorität: 23.11.2002 DE 10254704
(71) Anmelder: ADAM OPEL AG, 65423 Rüsselsheim (DE)
(72) Erfinder: Thyroff, Jürgen, 55296 Harxheim (DE)

(57) **Zusammenfassung**

Zur Diagnose der Funktionsfähigkeit einer Abgas-Katalysatoreinheit (5) wird ein Verbrennungsmotors (2) von einer Verbrennungsart "mager" in eine Verbrennungsart "fett" umgeschaltet. Beim Erreichen eines vorgegebenen Startwerts an einer ersten Lambdasonde (4) wird eine Zeitmassung gestartet beim Erreichen eines vorgegebenen Stoppwerts an einer zweiten Lambdasonde (7) wieder gestoppt. Anschließend wird die sich aus der Zeitmessung ergebenden Zeitdifferenz (t₂ - t₁) mit einem vorgegebenen Referenzzeitwert (t_{ref}) verglichen und das Ergebnis des Vergleichs ausgegeben.

## Beschreibung

Die Erfindung betrifft ein Verfahren zur Diagnose der Funktionsfähigkeit einer Abgas-Katalysatoreinheit. Die Erfindung betrifft weiterhin eine entsprechende Katalysatoreinheit sowie ein Kraftfahrzeug mit einem Verbrennungsmotor, das mit einer solchen Katalysatoreinheit ausgerüstet ist.

Im Stand der Technik ist es bekannt, die von einem Verbrennungsmotor stammenden Abgase mittels einer Katalysatoreinheit so zu behandeln, dass diese für die Umgebung unschädlich sind. Im Betrieb von Kraftfahrzeugen, die ein solches Verfahren zur Behandlung von Abgasen verwenden, stellt sich häufig das Problem, dass die Katalysatoreinheit altert oder beschädigt wird und ihre Funktionsfähigkeit verliert. Zur Überprüfung, ob eine Katalysatoreinheit noch arbeitet, sind verschiedene Verfahren vorgeschlagen worden. Die EP 4 444 783 A1 zeigt ein Verfahren, bei dem ein Katalysator mit einer Amplituden- und Periodendauermodulation einer Lambda-Regelung überprüft wird. Dabei wird das von einer Lambda-Sonde abgegebene Signal im Hinblick auf Amplitudenverhältnisse ausgewertet, wobei die Spannungen von Lambda-Sonden miteinander verglichen werden, die vor und nach dem Katalysator angeordnet sind. Diese Art der Auswertung ist relativ aufwendig.

Außerdem ist es denkbar, bei einem Verbrennungsmotor während des Ausschiebetaktes eine Kraftstoffnacheinspritzung vorzunehmen. Dabei wird unverbrannter Kraftstoff den Verbrennungsgasen beigemengt. Dieser unverbrannte Kraftstoff wird in einem Katalysator umgesetzt und führt zu einer exothermen Erwärmung, die mit einem Temperatursensor gemessen und mit einem vorher modellierten Temperaturverlauf verglichen wird. Auf diese Weise lässt sich die Funktionalität eines Katalysators relativ genau überprüfen, jedoch ist damit ein erhöhter Kraftstoffverbrauch und eine erhöhte thermische Belastung des Katalysators in der Katalysatoreinheit verbunden. Die EP 0 626 507 B1 zeigt ein solches Verfahren, bei dem die Temperaturcharakteristik der Aktivität des Katalysatormaterials zur Beurteilung dessen Funktionsfähigkeit herangezogen wird.

Es ist Aufgabe der Erfindung, ein Verfahren bereitzustellen, mit dem eine Katalysatoreinheit zuverlässig und kostengünstig darauf hin überprüft werden kann, ob sie noch funktionsfähig ist.

Diese Aufgabe wird durch den Gegenstand der unabhängigen Ansprüche gelöst. Vorteilhafte Weiterbildungen ergeben sich aus den jeweiligen abhängigen Ansprüchen.

Das erfindungsgemäße Verfahren sieht einen Verbrennungsmotor vor, der hinsichtlich seiner Verbrennungsart "fett", "stöchiometrisch" oder "mager" verstellt werden kann. Solche Verbrennungsmotoren sind beispielsweise als Direkteinspritz-Benzinmotoren bekannt, bei denen ein geschichteter Motorbetrieb möglich ist. Über die Einspritzpumpe eines solchen Verbrennungsmotors kann durch Beimessung einer entsprechenden Kraftstoffmenge je Zylinder auf einfache Weise eine fette, eine magere oder eine stöchiometrische Verbrennung im Zylinder eingestellt werden. Die Abgas-Katalysatoreinheit weist dabei eine erste Lambda-Sonde auf, die in Strömungsrichtung vor der Abgas-Katalysatoreinheit angeordnet ist. Außerdem ist erfindungsgemäß eine zweite Lambda-Sonde in Strömungsrichtung nach der Abgas-Katalysatoreinheit angeordnet.

Bei dem erfindungsgemäßen Verfahren wird der Verbrennungsmotor von einer ersten vorgegebenen Verbrennungsart in eine zweite vorgegebene Verbrennungsart umgeschaltet, wobei zunächst die von der ersten Lambda-Sonde abgegebenen Messwerte beobachtet werden. Wenn die von der ersten Lambda-Sonde abgegebenen Messwerte einen vorgegebenen Startwert erreichen, dann wird eine Zeitmessung gestartet. Während der Zeitmessung werden die von der zweiten Lambda-Sonde abgegebenen Messwerte beobachtet und die Zeitmessung beim Erreichen eines vorgegebenen Stoppwerts der zweiten Lambda-Sonde gestoppt. Die sich aus der Zeitmessung ergebende Zeitdifferenz wird mit einem vorgegebenen Referenzzeitwert verglichen, wobei gemäß der Erfindung das Ergebnis des Vergleichs ausgegeben wird. Dieses Ergebnis läßt einen unmittelbaren Schluß auf die Funktion des Katalysators zu.

Dabei kann die erfindungsgemäße Steuerungseinheit den Verbrennungsmotor sowohl zum Umschalten von einer Verbrennungsart in eine Verbrennungsart veranlassen als auch ein ohnehin vorgesehenes Umschalten abtasten und dabei die Zeitmessung starten und wieder stoppen.

Die Erfindung lässt sich besonders einfach bei Kraftfahrzeugen umsetzen, die einen herkömmlichen Drei-Wege-Katalysator zur Umsetzung von CO-Anteilen und von CXHY-Anteilen und einen Nachkatalysator als NOₓ-Trap zur Umsetzung von Stickoxiden aufweisen. Dabei lässt sich das erfindungsgemäße Verfahren besonders vorteilhaft bei sogenannten "Schichtbetrieb"-Motoren umsetzen, die einen Schichtladebetrieb vorsehen. Im Schichtbetrieb wird dabei Abgas mit einem λ-Wert von ca. 1,8 erzeugt. Dies lässt sich im wesentlichen bei Benzin-Direkteinspritzmotoren herbeiführen, wobei der Schichtbetrieb bevorzugt im Leerlauf und bei niedrigen Geschwindigkeiten bis zu 80 km/h hergestellt wird. Im Schichtladebetrieb wird dabei derjenige Bereich des Brennraums eines Zylinders, in dem eine Verbrennung erfolgt, mit umhüllender isolierender Luft bereitgestellt. Durch die Luftumhüllung wird ein höherer Wirkungsgrad des Motors erzeugt. Dabei entstehen jedoch hohe NOₓ-Anteile in den erzeugten Verbrennungsgasen. Diese NOₓ-Anteile können im herkömmlichen Drei-Wege-Katalysator nicht in N₂ und O₂ umgewandelt werden. Hierfür wird eine separate NOₓ-Trap bereitgestellt, die die Umwandlung von NOₓ-Anteilen in N₂- und O₂-Anteile bewerkstelligt. Diese separate NOₓ-Trap kann für einen Zeitraum von ca. 30 sek bis 60 sek mit NOₓ-Anteilen im Abgas beaufschlagt Werden. Danach ist deren Speicherfähigkeit erschöpft. Danach muss sie mit Kohlenwasserstoff-Anteilen durchströmt werden, wobei die darin gespeicherten NOₓ-Anteile in N₂, O₂, CO₂ und H₂O umgewandelt werden.

Bei dem zeitlichen Ablauf des Betriebs einer solchen Katalysatoreinheit wird für ca. 30 Sek bis 60 Sek ein Schichtladebetrieb eingestellt, während dessen die NOₓ-Trap mit NOₓ-Bestandteilen aufgeladen wird. Danach wird für ca. 2 Sek ein fetter Betrieb mit λ < 1 an der Verbrennungsmaschine eingestellt, währenddessen die NOₓ-Anteile, die sich in der NOₓ-Trap befinden, in N₂, O₂, CO₂ und H₂O umgewandelt werden.

Bei einem solchen Motor lässt sich die Erfindung auf besonders einfache Weise umsetzen, denn die vorhandene Betriebsweise des Verbrennungsmotors zusammen mit der Katalysatoreinheit begünstigt das erfindungsgemäße Diagnostizierverfahren. Der Verbrennungsmotor geht dabei nämlich in regelmäßigen Abständen vom selbst von einer Verbrennungsart in eine andere Verbrennungsart über, wobei dies während des normalen Betriebs des Verbrennungsmotors erfolgt. Die handelsüblichen Kraftfahrzeuge mit einem für Schichtladebetrieb ausgerüsteten Motor brauchen zur Anwendung des erfindungsgemäßen Verfahrens nur mit einer zusätzlichen Lambda-Sonde nach dem sogenannten "Vorkat" bzw. Drei-Wege-Katalysator ausgerüstet werden.

Erfindungsgemäß werden die zur Regeneration der nachgeschalteten NOₓ-Trap erforderlichen Gemischsprünge zur Diagnose des Vorkats verwendet. Bei der Auswertung der Erfindung hat sich gezeigt, dass mit dem erfindungsgemäßen Verfahren eine einfache und zuverlässige Unterscheidung zwischen beschädigten Katalysatoren und funktionsfähigen Katalysatoren mit ausreichender Trennschärfe möglich ist, ohne dass ein Kraftstoffverbrauchsnachteil entsteht. Das erfindungsgemäße Verfahren hat dabei den großen Vorteil, dass im Gegensatz zu den im Stand der Technik bekannten Verfahren eine Diagnose des Vorkats erfolgen kann, ohne dass dieser thermisch belastet wird, beispielsweise durch Einspritzung von unverbranntem Kraftstoff.

Die Erfindung geht von der Erkenntnis aus, dass die Sauerstoffspeicherfähigkeit eines in einer Katalysatoreinheit eingesetzten Katalysators ein Maß für die Funktionstüchtigkeit des Katalysators an sich ist. Dabei wird weiterhin davon ausgegangen, dass die Funktionstüchtigkeit des Katalysators mit dessen Konvertierpotenzial zusammenhängt. Das erfindungsgemäße Verfahren verwendet die bei Fahrzeugen mit Vorkat und NOₓ-Trap ohnehin vorhandenen zyklischen Regenerationsvorgänge dazu, den Alterungszustand des vorgelagerten Drei-Wege-Vorkats bezüglich seiner verbleibenden Sauerstoffspeicherfähigkeit anhand der Sprungzeitdifferenzen der in Strömungsrichtung vor und nach dem Vorkat angeordneten Lambda-Sonden zu diagnostizieren. Somit bietet sich das erfindungsgemäße Verfahren besonders für fremdgezündete Verbrennungskraftmaschinen an, die diskontinuierlich in einem mageren Gemischbetrieb laufen. Dies betrifft dementsprechend Benzinmotoren mit Direkteinspritzung und Schichtladebetrieb oder sogenannte "MPFI"-Motoren, die längere Zeit bei λ > 1 laufen. Solche Motoren sind auch als "Magermotoren" bekannt.

Der besondere Vorteil des erfindungsgemäßen Verfahrens liegt darin, dass die Diagnose des Katalysators in der Katalysatoreinheit bei normalem Fahrbetrieb erfolgen kann. Anders als bei dem Stand der Technik bekannten Verfahren, bei denen die Katalysatordiagnose im Leerlauf erfolgen muss oder bei einer bestimmten Drehzahl, bei der eine stöchiometrische Verbrennung vorliegt, kann somit die Erfindung auch zyklisch ständig während der Fahrt erfolgen. Dabei ist auch eine Mehrfachbewertung der ermittelten Übergangszeiten zur Bildung eines gleitenden Mittelwertes denkbar. Dies trägt zur Stabilisierung des Diagnoseergebnisses bei. Die Verfahrensschritte können dabei auch ausgehend von denselben Randbedingungen mehrmals hintereinander ausgeführt werden, wobei eine aus mehreren sich jeweils aus der Zeitmessung ergebenden Zeitdifferenzen gemittelte Zeitdifferenz mit dem Referenzzeitwert verglichen wird.

Zu der Ausführung des erfindungsgemäßen Verfahrens ist es sowohl denkbar, den Verbrennungsmotor von der Verbrennungsart "fett" auf die Verbrennungsart "mager" umzuschalten, und dementsprechend die sich ergebende Zeitdifferenz bzw. die Sprungzeitdifferenz auszuwerten. Abweichend davon kann der Verbrennungsmotor auch von der Verbrennungsart "mager" auf die Verbrennungsart "fett" umgeschaltet werden. In der Praxis hat sich dabei gezeigt, dass die sich ergebende Sprungzeitdifferenz bzw. die sich ergebende Zeitdifferenz beim Übergang von "mager" auf "fett" sich deutlich von der Sprungzeitdifferenz bei einem defekten Drei-Wege-Katalysator unterscheidet.

Bei den Änderungen der Verbrennungsart des Verbrennungsmotors kann gemäß der Erfindung besonders vorteilhaft der Übergangsbereich um λ = 1 betrachtet werden. Dementsprechend wird an dem Verbrennungsmotor eine Änderung wenigstens im Bereich zwischen λ ≥ 1,05 auf λ≤ 0,95 und insbesondere zwischen λ ≥ 1,1 und λ ≤ 0,8 erzeugt. Dabei ergeben sich besonders zuverlässige Auswertungsergebnisse.

Zur Bestimmung eines Referenzwertes zur Verwendung im erfindungsgemäßen Diagnoseverfahren bieten sich mehrere Möglichkeiten an. Zum einen ist es denkbar, mit einer als funktionsfähig bekannten Abgas-Katalysatoreinheit die erfindungsgemäßen Diagnostizierschritte wiederholt bei zunehmenden Abgasmassenströmen durchzuführen. Je größer die Abgasmassenströme sind, bei denen die Messungen durchgeführt werden, um so mehr nähert sich die erfindungsgemäß ermittelte Sprungzeitdifferenz bei den beiden Lambda-Sonden einer Minimalsprungzeit an. Der entsprechende Minimalsprungzeitwert wird dann als Referenzzeitwert verwendet, wobei davon ausgegangen wird, dass die Katalysatoreinheit defekt ist, wenn die erfindungsgemäß ermittelte Sprungzeit bei einem üblichen Betriebszustand des Verbrennungsmotors in die Nähe des Minimalsprungzeitwerts für sehr große Abgasmassenströme kommt.

Abweichend von dem vorstehend geschilderten Verfahren zur Bestimmung eines Referenzzeitwerts kann auch eine Referenzmessung mit einer als nicht-funktionsfähig bekannten, mit der ersten Abgas-Katalysatoreinheit baugleichen zweiten Abgas-Katalysatoreinheit durchgeführt werden. Der Referenzzeitwert für die erste Abgas-Katalysatoreinheit wird dabei so gewählt, dass er größer ist als jeder der bei der Messung der zweiten Abgas-Katalysatoreinheit ermittelten Zeitdifferenzen. Auf diese Weise wird sichergestellt, dass die beurteilte erste Abgas-Katalysatoreinheit jedenfalls dann als "defekt" angezeigt wird, wenn ihre Betriebseigenschaften zu der als nicht-funktionsfähig bekannten zweiten Abgas-Katalysatoreinheit ähnlich sind.

Es ist auch denkbar, die beiden vorstehend genannten Verfahren zum Bestimmen eines Referenzzeitwertes miteinander zu kombinieren. Hierzu wird der Referenzzeitwert für die erste Abgas-Katalysatoreinheit so gewählt, dass er größer ist als jeder der bei der Messung der zweiten Abgas-Katalysatoreinheit ermittelten Zeitdifferenzen und kleiner als der für die erste Abgas-Katalysatoreinheit ermittelte Minimalsprungzeitwert für gegenüber einem üblichen Betriebszustand des Verbrennungsmotors sehr große Luftmassenströme.

Die Erfindung ist auch in einer Katalysatoreinheit zum Durchströmen mit Abgas eines Verbrennungsmotors verwirklicht, vor der eine erste Lambda-Sonde angeordnet ist und nach der eine zweite Lambda-Sonde angeordnet ist. Außerdem ist eine mit dem Verbrennungsmotor mit der ersten Lambda-Sonde und mit der zweiten Lambda-Sonde verbundene Steuerungseinheit mit einer Zeitmesseinrichtung vorgesehen. Die Steuerungseinheit wertet beim Erfassen des Umschaltens des Verbrennungsmotors von einer ersten vorgegebenen Verbrennungsart in eine zweite vorgegebene. Verbrennungsart die von den beiden Lambda-Sonden abgegebenen Messwerte aus. Beim Erreichen eines vorgegebenen Startwerts der ersten Lambda-Sonde startet die Steuerungseinheit eine Zeitmessung. Beim Erreichen eines vorgegebenen Stoppwerts der zweiten Lambda-Sonde wird die Zeitmessung gestoppt. Die Steuerungseinheit ermittelt die sich aus der Zeitmessung ergebende Zeitdifferenz, wobei eine Vergleichseinrichtung mit einer Anzeigeeinheit die sich aus der Zeitmessung ergebende Zeitdifferenz mit einem vorgegebenem Referenzzeitwert vergleicht. Außerdem wird das Ergebnis des Vergleichs angezeigt.

Die Erfindung ist ferner in einem Verbrennungsmotor mit einer im Abgastrakt des Verbrennungsmotors vorgesehenen Katalysatorbaugruppe gemäß der Erfindung verwirklicht. Außerdem betrifft die Erfindung ein entsprechend ausgerüstetes Kraftfahrzeug mit einem Verbrennungsmotor.

Die Erfindung ist in der Zeichnung anhand eines Ausführungsbeispiels näher veranschaulicht.
- Figur 1: zeigt eine schematische Darstellung eines erfindungsgemäßen Kraftfahrzeugs,
- Figur 2: zeigt ein Zeitdiagramm, das den Verlauf der von zwei Lambda-Sonden des Kraftfahrzeugs aus Figur 1 abgegebenen Messwerten über der Zeit wiedergibt,
- Figur 3: zeigt Zeitdifferenzen, die beim Betrieb des Kraftfahrzeugs aus Figur 1 gemessen worden sind.

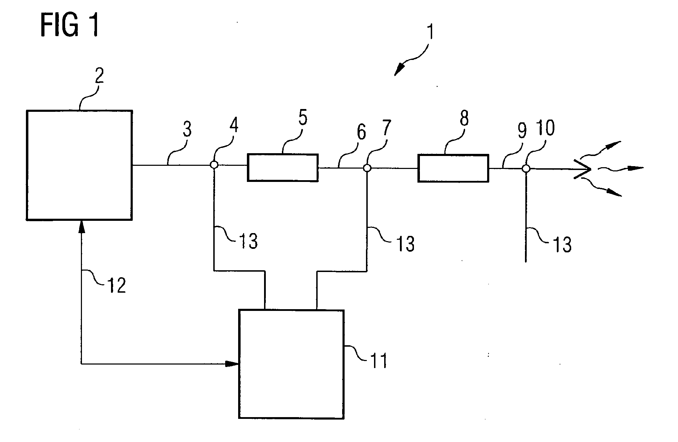

Figur 1 zeigt schematisch ein erfindungsgemäßes Kraftfahrzeug 1. Das Kraftfahrzeug 1 gliedert sich in einen Verbrennungsmotor 2 und in einen Abgastrakt, der von dem Auspuffkrümmer 3 mit einer ersten Lambda-Sonde 4, von einem Vorkat 5, von einem Verbindungsrohr 6 mit einer zweiten Lambda-Sonde 7, von einer NOₓ-Trap 8 und von einem Endrohr 9 mit einer dritten Lambda-Sonde 10 gebildet wird.

Außerdem ist eine Steuerungseinheit 11 vorgesehen, die über eine Motorverbindungsleitung 12 mit dem Verbrennungsmotor 2 in Verbindung steht. Die Steuerungseinheit 11 steht über Sondenverbindungsleitungen 13 noch mit der ersten Lambda-Sonde 4 und der zweiten Lambda-Sonde 7 in Verbindung. Die dritte Lambda-Sonde 10 steht mit einer Sondenverbindungsleitung 13 mit einer weiteren Steuerungseinheit in Verbindung, die in dieser Ansicht nicht gezeigt wird.

Von den im Stand der Technik bekannten Kraftfahrzeugen unterscheidet sich das erfindungsgemäße Kraftfahrzeug 1 insbesondere durch die zusätzlich vorgesehene zweite Lambda-Sonde 7 sowie durch die besondere Ausgestaltung der Steuerungseinheit 11. Der Verbrennungsmotor 2 kann dabei als Magermotor oder als im Schichtbetrieb laufender Motor ausgebildet sein, jedoch ist dies für das Umsetzen der Erfindung nicht notwendig. Die erfindungsgemäße Katalysatordiagnose erfolgt dabei durch das Umschalten des Verbrennungsmotors 2 von einer Verbrennungsart "fett", "stöchiometrisch" oder "mager" in eine dazu verschiedene andere Verbrennungsart. Dabei lässt sich auf einfache Weise und ohne zusätzliche thermische Belastung der Vorkat 5 auf seine Funktionsfähigkeit hin überprüfen.

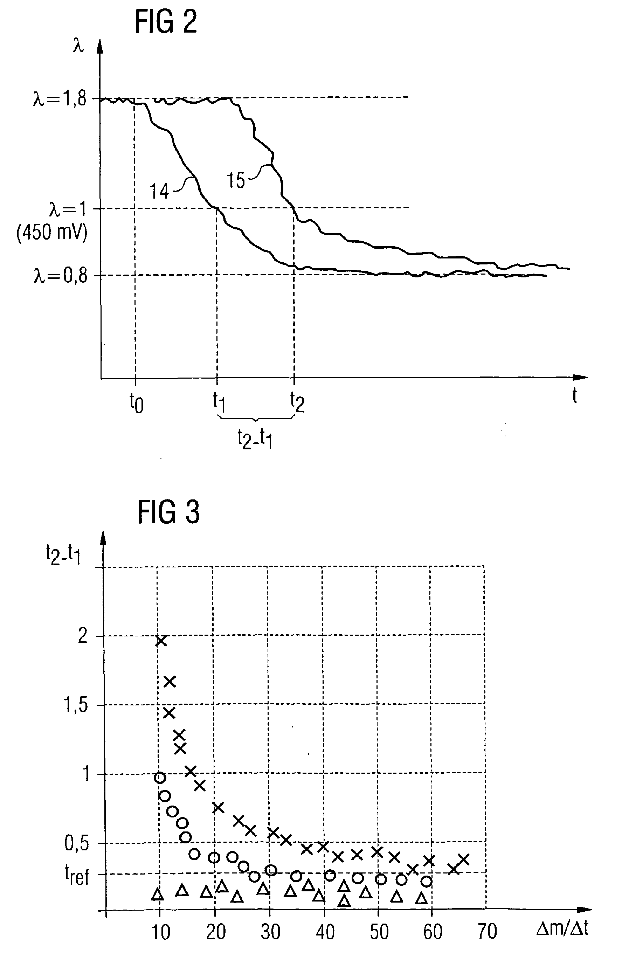

Figur 2 veranschaulicht das Umschalten der Verbrennungsart des Verbrennungsmotors 2 anhand eines Beispiels, in dem dieser von der Verbrennungsart "mager" auf die Verbrennungsart "fett" umgeschaltet wird. Dabei zeigt ein erstes Messsignal 14 das von der ersten Lambda-Sonde 4 abgegebene Signal. Ein zweites Messsignal 15 zeigt das von der zweiten Lambda-Sonde 7 abgegebene Messsignal. Das erste Messsignal 14 und das zweite Messsignal 15 sind nach rechts über die Zeit aufgetragen. Wie man in Figur 2 deutlich sieht, läuft der Verbrennungsmotor 2 zunächst in einem mageren Betrieb, was durch das Messsignal λ = 1,8 sowohl von der ersten Lambda-Sonde 4 als auch von der zweiten Lambda-Sonde 7 angezeigt wird. Zum Zeitpunkt t₀ detektiert die erste Lambda-Sonde 4, dass der Verbrennungsmotor 2 hinsichtlich seiner Verbrennungsart umgeschaltet wurde, denn der Sauerstoffanteil in dem an der ersten Lambda-Sonde 4 vorbeistreichenden Verbrennungsgas nimmt ab. Dies resultiert darin, dass das erste Messsignal 14 abzunehmen beginnt. Dabei folgt es im wesentlichen dem Verlauf einer e-Kurve, wobei es sich asymptotisch dem Wert λ = 0,8 annähert, der einem in der Verbrennungsart "fett" typischen λ-Wert der Verbrennungsgase entspricht. Zeitversetzt zum ersten Messsignal 14 folgt das zweite Messsignal 15, wobei sich dieses ebenfalls dem Verlauf einer e-Kurve folgend asymptotisch dem Wert λ = 0,8 annähert. Die Zeitversetzung bei der Reaktion auf die Zusammensetzung der Verbrennungsgase im Auspuffkrümmer 3 und im Verbindungsrohr 6 ergibt sich im wesentlichen aus zwei Gründen. Zum einen benötigt das Verbrennungsgas zum Überwinden der Strecke zwischen der ersten Lambda-Sonde 4 und der zweiten Lambda-Sonde 7 eine gewisse Mindestzeit, die von der Strömungsgeschwindigkeit im Auspuffkrümmer 3, im Vorkat 5 und im Verbindungsrohr 6 abhängt. Hinzu kommt, dass der Vorkat 5 über ein gewisses Sauerstoffspeichervermögen verfügt. Dies bewirkt, dass der Vorkat 5 noch Sauerstoff an das ihn durchströmende relativ fette Verbrennungsgas abgibt, wenn der Verbrennungsmotor 2 bereits von einer mageren Verbrennung in eine fette Verbrennung umgeschaltet hat. Auf diese Weise detektiert die zweite Lambda-Sonde 7 noch das Vorhandensein von Sauerstoff im Verbrennungsgas, obwohl vom Verbrennungsmotor 2 kein Sauerstoff mehr abgegeben wird.

Zum Vergleich der Messsignale, die von der ersten Lambda-Sonde 4 und von der zweiten Lambda-Sonde 7 abgegeben werden, wird ein Referenzwert eingeführt. Im vorliegenden Fall wird hierfür der Wert λ = 1 angewendet, der bei handelsüblichen Lambda-Sonden vorliegt, wenn diese eine Messspannung von 450 mV abgeben.

Die Steuerungseinheit 11 detektiert, dass der Verbrennungsmotor 2 von einer Verbrennungsart "mager" in eine andere Verbrennungsart "fett" umgeschaltet wird. Demzufolge überwacht sie das auf der zu der ersten Lambda-Sonde 4 führenden Sondenverbindungsleitung 13 anliegende Messsignal auf das Unterschreiten eines Messwerts für λ = 1. Zum Zeitpunkt t₁ ist dies der Fall. Die Steuerungseinheit 11 setzt eine in dieser Ansicht nicht gezeigte Zeitmesseinrichtung in Gang. Gleichzeitig überwacht die Steuerungseinheit 11 das von der zweiten Lambda-Sonde 7 abgegebene Messsignal auf das Unterschreiten des Werts λ = 1. Zum Zeitpunkt t₂ ist dies der Fall. Zu diesem Zeitpunkt bestimmt die Steuerungseinheit 11 die Zeitdifferenz t₂ - t₁ und vergleicht diese mit einer in der Steuerungseinheit 11 abgespeicherten Referenzzeit. Außerdem ist eine hier nicht veranschaulichte Mittelwertbildung von mehreren hintereinander durchgeführten Messungen vorgesehen.

Wenn die gemessene Zeitdifferenz t₂ - t₁ kleiner als die vorgegebene Referenzzeit ist, dann wird über eine in dieser Ansicht nicht gezeigte Warnvorrichtung dem Benutzer des Kraftfahrzeugs 1 ein Warnsignal ausgegeben, aus dem er auf eine Beschädigung des Vorkats 5 schließen kann.

Figur 3 veranschaulicht einige Messergebnisse, die unter verschiedenen Betriebsbedingungen des Kraftfahrzeugs 1 ermittelt worden sind. Dabei ist auf der horizontalen Achse der Abgasmassenstrom Δm/Δt aufgetragen, der momentan vom Verbrennungsmotor erzeugt wird. In der vertikalen Achse ist die mit dem erfindungsgemäßen Verfahren gemessene Sprungzeitdifferenz t₂ - t₁. In Figur 3 sind drei verschiedene Messwerte mit unterschiedlichen Messpunkten "x", "o" und "Δ" aufgeführt. Die Messwerte "x" stehen für Sprungzeitdifferenzen, die bei Betriebsartänderungen von "mager" nach "fett" gemäß Figur 2 ermittelt worden sind, und zwar bei unterschiedlichen Abgasmassenströmen von 10 kg/h bis ca. 60 kg/h. Die Messwerte "o" sind bei Änderungen der Verbrennungsart von "fett" nach "mager" ermittelt worden. Im Gegensatz zu den beiden Messwertarten "x" und "o" stehen die Messwerte "Δ" für Messungen die mit einem als defekt bekannten Vorkat 5' ausgeführt worden sind, der hier nicht gezeigt ist.

Wie man in dieser Ansicht besonders gut sieht, sind die sich ergebenden Sprungzeitdifferenzen gemäß den Messwerten "Δ" unabhängig von dem Durchsatz an Verbrennungsgasen pro Zeiteinheit. Die Sprungzeitdifferenz ergibt sich im wesentlichen aus der geometrischen Anordnung der ersten Lambda-Sonde 4 und der zweiten Lambda-Sonde 7.

Außerdem ergibt sich aus Figur 3, dass sich sowohl Übergänge in der Verbrennungsart "fett" nach "mager" als auch von "mager" nach "fett" zur Diagnose des Vorkats 5 heranziehen lassen. Dies gilt besonders dann, wenn der Verbrennungsmotor relativ niedrige Abgasmassenströme bis zu 20 kg/h bis 30 kg/h erzeugt. Für diesen Fall ergeben sich nämlich deutliche Unterschiede im Vergleich mit der Sprungzeitdifferenz zu einem als Defekt vorbekanntem Katalysator.

Wenn zur Ermittlung einer Referenzzeit ein asymptotisch angenäherter Wert für sehr große Abgasmassenströme herangezogen wird, dann ergeben sich Vorteile zugunsten der Verwendung von Auswertungen bei Änderungen hinsichtlich der Verbrennungsart von "mager" zu "fett" gemäß den Messpunkten "x". Bei dieser Änderung der Verbrennungsart sind nämlich auch bei relativ hohen Massenströmen hinsichtlich der vom Verbrennungsmotor 2 erzeugten Abgase deutliche Unterschiede zwischen den Sprungzeitdifferenzen für den normalen Betrieb und den asymptotisch erreichten Sprungzeitdifferenzen für sehr hohe Durchsätze von Abgasmassenströmen ersichtlich. Gerade bei Abgasmassendurchsätzen bis 40 kg/h ergibt sich so eine gute Trennschärfe, wodurch defekte Vorkats 5 gut von funktionsfähigen Vorkats 5 unterschieden werden können.

### Bezugszeichenliste

- 1: Kraftfahrzeug
- 2: Verbrennungsmotor
- 3: Auspuffkrümmer
- 4: Erste Lambda-Sonde
- 5: Vorkat
- 6: Verbindungsrohr
- 7: Zweite Lambda-Sonde
- 8: NOₓ-Trap
- 9: Endrohr
- 10: Dritte Lambda-Sonde
- 11: Steuerungseinheit
- 12: Motorverbindungsleitung
- 13: Sondenverbindungsleitung
- 14: Erstes Messsignal
- 15: Zweites Messsignal

## Patentansprüche

1. Verfahren zur Diagnose der Funktionsfähigkeit einer Abgas-Katalysatoreinheit (5), die von Abgas eines hinsichtlich der Verbrennungsart "fett", "stöchiometrisch" oder "mager" einstellbaren Verbrennungsmotors (2) durchströmt wird, wobei vor der Abgas-Katalysatoreinheit (5) eine erste Lamdasonde (4) angeordnet ist und wobei nach der Abgas-Katalysator-einheit (5) eine zweite Lambdasonde (7) angeordnet ist, wobei das Verfahren die folgenden Schritte aufweist:
a) Umschalten des Verbrennungsmotors (2) von einer ersten vorgegebenen Verbrennungsart in eine zweite vorgegebene Verbrennungsart,
b) Beobachten der von der ersten Lambdasonde (4) abgegebenen Messwerte und Starten einer Zeitmessung beim Erreichen eines vorgegebenen Startwerts der ersten Lambdasonde (4),
c) Beobachten der von der zweiten Lambdasonde (7) abgegebenen Messwerte und Stoppen der Zeitmessung beim Erreichen eines vorgegebenen Stoppwerts der zweiten Lambdasonde (7),
d) Vergleich der sich aus der Zeitmessung ergebenden Zeitdifferenz (t₂ - t₁) mit einem vorgegebenen Referenzzeitwert (t_{ref}),
e) Ausgabe des Ergebnisses des Vergleichs.

2. Verfahren nach Anspruch 1, **dadurch gekennzeichnet, dass** die Verfahrensschritte a) bis e) ausgehend von im wesentlichen denselben Randbedingungen mehrmals hintereinander ausgeführt werden, wobei eine aus mehreren sich jeweils aus der Zeitmessung ergebenden Zeitdifferenzen gemittelte Zeitdifferenz mit dem Referenzzeitwert verglichen wird.

3. Verfahren nach einem der vorhergehenden Ansprüche, **dadurch gekennzeichnet, dass** in Schritt a) der zunächst "mager" betriebene Verbrennungsmotor (2) mit λ >= 1,05 auf "fetten" Betrieb mit λ <= 0,95 umgeschaltet wird.

4. Verfahren nach Anspruch 3, **dadurch gekennzeichnet, dass** in Schritt a) der zunächst "mager" betriebene Verbrennungsmotor (2) mit λ >= 1,1 auf "fetten" Betrieb mit λ <= 0,8 umgeschaltet wird.

5. Verfahren nach einem der vorhergehenden Ansprüche, **dadurch gekennzeichnet, dass** in den Schritten b) und c) als Startwert und als Stoppwert der Wert λ = 1 gewählt wird.

6. Verfahren zur Bestimmung eines Referenzzeitwert zur Verwendung in einem Verfahren zur Diagnose der Funktionsfähigkeit einer Abgas-Katalysatoreinheit nach einem der vorhergehenden Ansprüche, bei dem die Schritte a) bis e) mit einer als funktionsfähig bekannten Abgas-Katalysatoreinheit wiederholt bei zunehmenden Abgasmassenströmen durchgeführt werden, wobei ein Minimalsprungzeitwert für gegenüber einem vorgesehenen üblichen Betriebszustand des Verbrennungsmotors sehr große Abgasmassenströme bestimmt und als Referenzzeitwert verwendet wird.

7. Verfahren zur Bestimmung eines Referenzzeitwert zur Verwendung in einem Verfahren zur Diagnose der Funktionsfähigkeit einer ersten Abgas-Katalysatoreinheit nach einem der Ansprüche 1 bis 5, bei dem die Schritte a) bis e) mit einer als nicht-funktionsfähig bekannten, baugleichen zweiten Abgas-Katalysatoreinheit wiederholt bei zunehmenden Abgasmassenströmen durchgeführt werden, wobei der Referenzzeitwert für die erste Abgas-Katalysatoreinheit so gewählt wird, dass er größer ist als jeder der bei der Messung der zweiten Abgas-Katalysatoreinheit ermittelten Zeitdifferenzen.

8. Verfahren zur Bestimmung eines Referenzzeitwert zur Verwendung in einem Verfahren zur Diagnose der Funktionsfähigkeit einer ersten Abgas-Katalysatoreinheit nach Anspruch 7 und Anspruch 8, **dadurch gekennzeichnet, dass** der Referenzzeitwert für die erste Abgas-Katalysatoreinheit so gewählt wird, dass er größer ist als jeder der bei der Messung der zweiten Abgas-Katalysatoreinheit ermittelten Zeitdifferenzen und kleiner als der für die erste Abgas-Katalysatoreinheit ermittelte Minimalsprungzeitwert für gegenüber einem üblichen Betriebszustand des Verbrennungsmotors sehr große Luftmassenströme.

9. Katalysatorbaugruppe mit einer Katalysatoreinheit (5) zum Durchströmen mit Abgas eines hinsichtlich der Verbrennungsart "fett", "stöchiometrisch" oder "mager" einstellbaren Verbrennungsmotors (2),
wobei vor der Katalysatoreinheit (5) eine erste Lambdasonde (4) angeordnet ist und
wobei nach der Katalysatoreinheit (5) eine zweite Lambdasonde (7) angeordnet ist, und
wobei eine mit dem Verbrennungsmotor (2), mit der ersten Lambdasonde (4) und mit der zweiten Lambdasonde (7) verbundene Steuerungseinheit (11) mit einer Zeitmesseinrichtung vorgesehen ist,
wobei die Steuerungseinheit (11) beim Erfassen des Umschaltens des Verbrennungsmotors (2) von einer ersten vorgegebenen Verbrennungsart in eine zweite vorgegebene Verbrennungsart die von der ersten Lambdasonde (4) und die von der zweiten Lambdasonde (7) abgegebenen Messwerte auswertet, beim Erreichen eines vorgegebenen Startwerts der ersten Lambdasonde (4) die Zeitmessung startet und beim Erreichen eines vorgegebenen Stoppwerts der zweiten Lambdasonde (7) die Zeitmessung stoppt,
wobei ferner eine Vergleichseinrichtung mit einer Anzeigeeinheit zum Vergleich der sich aus der Zeitmessung ergebenden Zeitdifferenz (t₂ - t₁) mit einem vorgegebenen Referenzzeitwert (t_{ref}) und zur Anzeige des Ergebnisses des Vergleichs vorgesehen ist.

10. Verbrennungsmotor (2) mit einer im Abgastrakt des Verbrennungsmotors vorgesehenen Katalysatorbaugruppe (4, 5, 7, 11) nach Anspruch 9.

11. Kraftfahrzeug (1) mit einem Verbrennungsmotor (2) nach Anspruch 10.
